(19) Europäisches Patentamt / European Patent Office / Office européen des brevets

(11) **EP 3 389 257 A1**

(12) **EUROPEAN PATENT APPLICATION**

(43) Date of publication:
**17.10.2018 Bulletin 2018/42**

(51) Int Cl.:
**H04N 5/235** (2006.01)

(21) Application number: **17166499.8**

(22) Date of filing: **13.04.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **Continental Automotive GmbH 30165 Hannover (DE)** | (72) Inventors:<br>• **Guerreiro, Rui**<br>  **Brighton, BN1 5PP (GB)**<br>• **Plowman, Robin**<br>  **Southwick, BN42 4RL (GB)**<br><br>(74) Representative: **Bobbert, Christiana et al**<br>**Conti Temic microelectronic GmbH**<br>**Patente & Lizenzen**<br>**Sieboldstrasse 19**<br>**90411 Nürnberg (DE)** |

(54) **METHOD FOR ADAPTING BRIGHTNESS OF IMAGE DATA, IMAGE CAPTURING SYSTEM AND ADVANCED DRIVER ASSISTANCE SYSTEM**

(57) The present invention relates to an enhanced imaging. In order to avoid or reduce glare caused by bright light sources, bright image areas are identified in image data captured by an image sensor. Based on the identified bright image areas, only the brightness of the image data relating to the bright image area is adapted, while the brightness of the remaining image data is maintained.

FIG 2

FIG 3

EP 3 389 257 A1

**Description**

The present invention relates to a method for adapting brightness of image data and an image capturing system, in particular an image capturing system limiting the brightness of captured image data. Further, the present invention relates to an advanced driver assistance system comprising such an image capturing system.

Prior art

Modern vehicles are increasingly deployed with cameras that capture a scene outside the vehicle. Image data captured by these cameras may be used solely by algorithms of an advanced driver assistance system (ADAS) to measure some quantity or to take some decisions, for instance, for a cross traffic alert, a backup warning, etc. Further, the images may be used to shown content to a driver or other passengers of the vehicle.
When a very bright light source is located in a field of view covered by such a camera, a glare may be present, which can cause obstacles in the glare area from not been seen. These glare areas may be detected by using a glare detection method.
The document WO 2017/036645 A1 discloses a method and an apparatus for glare detection. Image pixels of an image having high luminance intensity are aggregated to a bright image area. Further, actual gradients around the bright image area and gradients in case of a glare are calculated. A glare diameter of a glare region around the respective bright image area is increased as long as the calculated actual gradients math the calculated expected gradients.
In a scenario where some glare is included in the images, the exposure parameter of the camera may be decreased. This results in a dark image. Alternatively, it may be also possible to reduce the intensity of the entire image or a display, which also results in a dark image in the areas other than the bright areas.
By decreasing the exposure parameter of the camera or reducing the intensity of the entire image or the display, images are created which are very dark and, therefore of poor content in the areas of the image that do not contain a light source.
Hence, there is a need for an enhanced image capturing dealing with scenarios comprising bright light sources in a dark environment.

Disclosure of the invention

This is achieved by features of the independent claims. In particular, the present invention provides a method for adapting brightness of an image with the features of claim 1 and an image capturing system with the features of claim 8.
According to an aspect, a method for adapting the brightness of the image data is provided. The method comprises a step of capturing image data by an image sensor and identifying a bright image area in the captured image data. In particular, a bright image area is identified. The method further comprises a step of reducing the brightness in the identified bright image area. The brightness of the image data not relating to the bright image area may be maintained.
According to a further aspect, an image capturing system is provided. The image capturing system comprises an image sensor, an image segmenting unit and a brightness adapting unit. The image sensor is adapted to capture image data. The image segmenting unit is adapted to identify a bright image area in the captured image data. The brightness adapting unit is adapted to reduce the brightness in the identified bright image area. The brightness of the image data not relating to the bright image area may be maintained.
With the method and the image capturing system according to the present invention, it is possible to adapt the brightness in the image data, even if a scene of the captured image comprises a bright light source causing some glare. In particular, it is possible to maintain and visualize details in dark areas of the image, as well as details in very bright image areas. Hence, it is possible to visualize and/or further process image data of a scene comprising light sources which cause a local glare in some image areas. In this way, details in the complete field of view of a camera can be recognized. Accordingly, it is not necessary to blank out some very bright image areas or give-up information in dark image areas by reducing an exposure time of camera or decreasing the brightness of the whole image data. Thus, the quality of the images can be enhanced and the amount of information in the image data can be increased.
An image sensor according to the present invention can be, for instance, a single camera or a camera system comprising a plurality of cameras. The image sensor may provide monochromatic image data or alternatively colored image data. Further, the image sensor is not limited to image data of visible light. Additionally or alternatively, the image sensor may also capture image data of invisible light, for instance infrared light. The image data captured by an image sensor may be provided in any arbitrary format. For instance, the image data may be provided as analogue image data or digital image data. If the image data comprises colored image data, the image data may be provided, for instance as image data comprising a luminance and a chrominance information. Alternatively, colored image data may be also provided as image data comprising separate colored channels, for instance, as image data comprising red, green and blue color data.

The image sensor may provide image data of a single image or a plurality of successive frames of an image sequence.

The image sensor may relate, for instance, to a camera of an advanced driver assistance system. For instance, such a camera may be directed forward, sideward or backwards. In particular, it is further possible to combine image data provided by a plurality of cameras.

According to an embodiment, identifying the bright image area in the captured image data comprises identifying an image area relating to a blinding effect. Any appropriate method for identifying image areas relating to a blinding effect can be applied. For example, a bright image area can be identified by determining image areas where a brightness value in the bright image area exceeds a predetermined threshold level. However, any further glare detection method can be applied, too. An example of a glare detection method is described, for instance, in WO 2017/036645 A1.

According to an embodiment, the step of reducing the brightness in the bright area may comprise a step of reducing a brightness value in the captured image data relating to the bright image area. For instance, if the image data relate to monochromatic image data, a brightness of the image data may be simply reduced by reducing a value of the pixels relating to the bright image area. If the image data relate to colored image data, the luminance of the image data may be reduced, and the chrominance of the image data may be maintained. However, any further method for reducing the brightness of the image data may be possible, too.

According to an embodiment, the step of identifying a bright area in the captured image data comprises a step of separating the image data in low frequency image data and high frequency image data. In this case, the step of reducing the brightness in the bright image area may comprise a step of reducing only the brightness in the low frequency image data relating to the bright image area. The brightness of the high frequency image data may be maintained. In this way, details in the image data can be maintained even though glare is reduced in the bright image area.

According to an embodiment, the step of reducing the brightness comprises a step of activating a brightness damping unit for locally damping the brightness of light. For example, a brightness damping unit may be arranged in front of the image sensor which is capturing the image data. In this way, the brightness of the bright image area can be reduced even before the image data are captured. Such a damping unit may be, for instance a unit which is integrated in the image capturing system or located directly in front of the optical system of the image capturing system. However, it may be also possible to locally damp the brightness by other elements. For instance, a damping unit may be arranged on a window, for example on a windshield of a vehicle. In this way, it is not only possible to damp the light directed to the camera, but also to reduce the brightness of a light source which can be seen by a user, for instance a driver of a vehicle.

According to a further embodiment, the step of reducing the brightness in the identified bright image area comprises a step of adjusting a setting of image capturing elements of the image sensor according to the identified bright image area. In this way, it is possible to setup the individual image capturing elements of an image sensor depending on a brightness which is expected to be captured. In this way, an overload of the image capturing elements of the image sensor can be avoided.

According to an embodiment, the brightness in the bright image area is reduced by a predetermined value or a predetermined factor. Such a predetermined value or factor may be a fixed value or factor. Alternatively, it is also possible to adjust the predetermined value or factor depending on the brightness in the image data or any further parameters. In particular, it may be possible to adapt the predetermined value or factor depending on further environmental parameters, such as an average brightness in the environment.

According to an embodiment, the step of identifying a bright image area in the captured image data identifies only such an image area as bright image area which has at least a predetermined size. For instance, the identifying of bright image area may be limited to image areas having at least a predetermined number of pixels, a predetermined minimum diameter, a predetermined minimum extension in X and/or Y direction. Further, the identified bright image area may be limited to image areas having a predetermined shape. For instance, the bright image area may be limited to rectangular, squared, rounded image areas or to image areas having a polygon shape or any other predetermined shape.

According to an embodiment of the image capturing system, the brightness adapting unit is adapted to adjust a setting of image capturing elements of the image sensor according to the identified bright image areas. In particular, the sensitivity of image capturing elements of the image sensor relating to the bright image area may be reduced.

According to an embodiment, the image capturing system comprises a brightness damping unit. Such a brightness damping unit may be arranged in front of the image sensor. In particular, the brightness damping unit may be integrated in the optical system of the image sensor or located directly in front of the image sensor. Alternatively, the damping unit may be also arranged at a predetermined distance of the image sensor. In particular, the damping unit may be also arranged at a window, for instance, a windshield of a vehicle. The brightness damping unit may be adapted to locally damp the brightness of light directed to the image sensor and/or the light directed to the driver of a vehicle.

Brief description of the drawings

In the following, the present invention is described in more detail in connection with the accompanying drawings, wherein:

Figure 1    illustrates a schematic drawing of an image capturing system according to an embodiment;

Figure 2    illustrates a schematic drawing of limiting brightness and image data according to an embodiment; and

Figure 3    illustrates a schematic diagram of a flowchart underlying a method for limiting brightness and image data according to an embodiment.

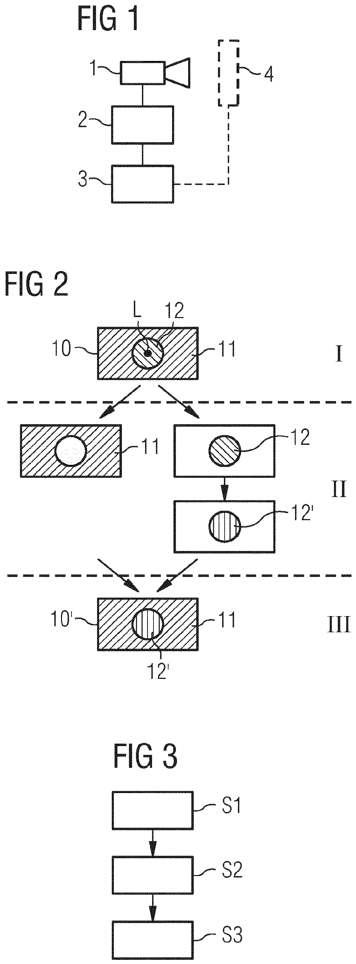

Figure 1 shows a schematic illustration of an image capturing system according to an embodiment. The image capturing system comprises an image sensor 1, an image segmenting unit 2 and a brightness adapting unit 3. Image sensor 1 may be any kind of image sensor. For example, image sensor 1 may be a single camera or system comprising a plurality of cameras. In particular, image sensor 1 may be a camera or a camera system of a vehicle. The image data provided by the image sensor 1 may be used, for instance, to make decisions in an advanced driver assistance system (ADAS) or for an automated driving of the vehicle. Additionally or alternatively, the image data provided by image sensor 1 may be displayed on a display.

Image sensor 1 may capture a scene of a predetermined field of view. If a light source is located in this scene in the field of view of image sensor 1, a glare may be presented in an area surrounding this light source. Thus, an area surrounding such a light source may be represented by a glare area, in which it may be not possible to detect any structure or object. Hence, such an area cannot be used for an analysis in an advanced driver assistance system. Further, displaying such an image, for instance, by white or almost white pixels, will cause some discomfort to a user.

Thus, brightness is reduced in such an area of brightness as described in the following.

For this purpose, the image data captured by image sensor 1 are provided to an image segmenting unit 2. Image segmenting unit 2 identifies a bright image area in the image data captured by image sensor 1. For example, image segmenting unit 2 may identify all pixels having a brightness value larger than a predetermined threshold level.

If image sensor 1 provides monochromatic image data, the brightness of a pixel may directly correspond to a value of the corresponding pixel. If image sensor 1 provides colored image data, it might be necessary to compute the brightness from the colored image data. For example, a chrominance and a luminance value for each pixel can be determined. In this case, the luminance value of the pixel may be used to analyze the brightness of the respective pixel in an additional step. However, any further method or algorithm for determining a brightness of pixels may be possible, too. An example of a glare detection is described, for instance, in WO 2017/036645 A1.

To detect a bright image area, a threshold level may be set to 95 %. Hence, each pixel having a brightness value larger than 95 % of a maximum intensity level may be identified as a bright pixel. For example, if the brightness is defined in an 8 bit image with a maximum intensity level of 255, pixels having an intensity level higher than 242 may be considered as bright pixels.

Additionally, further image enhancement operations, for example sharpening, contrast enhancement, color enhancement, filtering etc. may be applied to the image data, in particular to the image data of the bright image area.

Since small image areas do not blind a viewer when displaying the image data, the identification of bright image areas may be restricted only to large regions. For example, image segmenting unit 2 may perform a standard erosion plus dilation morphological operations to detect only large regions. However, any other method for restricting the identification of bright image areas to large image areas may be possible, too. For example, image segmenting unit 2 may consider only such image areas as bright image areas, which have a predetermined size. For this purpose, a minimum extension in X or Y direction may be specified. Alternatively, it is possible to restrict the minimum size of bright image area to a minimum diameter or a minimum number of adjacent pixels. Any other condition for restricting the minimum size of a detected bright image area is also possible. Further, any existing or new detection of glare in image data can be applied. For example, glare detection can be performed based on an analysis of gradients around an aggregation of pixels having high luminance values.

Further, it is possible to restrict the bright image area to image area having a predetermined shape. For instance, the bright image area may be restricted to squared, rectangular, circular area or an area having any other predetermined shape.

After identifying a bright image area in the image data captured by image sensor 1, brightness adapting unit 3 reduces the brightness in the identified bright image area. The brightness of the further image data of the captured image which do not relate to the bright image area is maintained. After reducing the brightness in the identified bright image area, the image area with the reduced brightness is combined with the remaining image data. In this way, a new image is obtained, wherein only the brightness in an identified bright image area is reduced.

To reduce the brightness of the bright image area, the brightness values of the pixels in the bright image area may be multiplied with a predetermined factor. In particular, such a predetermined factor may be smaller than 1. For example, the predetermined factor may be 0.75. However, any other factor larger than 1, for instance 0.8, 0.9 is possible, too. Alternatively, it is also possible to reduce the brightness in the predetermined image area by a predetermined value or to limit the brightness to a predetermined maximum value.

To adapt the brightness in the image data captured by image sensor 1, it is possible to perform the above identified operations for each image captured by image sensor 1, separately. Alternatively, it might be also possible to identify bright image areas only once for a plurality of a successively captured frames of an image sequence. In this way, the computational load of image segmenting unit 2 can be reduced. For instance, a same bright image area may be applied to 5, 10 or 20 successive frames captured by image sensor 1. The number of frames which may relate to a common bright image area may be adapted depending on a frame rate of image sensor 1.

In an embodiment, the brightest pixels may be limited to a predetermined brightness value. For example, each pixel in a bright image area, which is larger than a predetermined threshold value, is set to a predetermined maximum brightness value. In this way, glare in the image data displayed on a display can be avoided which provides more comfort to a user watching this image.

Additionally, it is possible to split the image data captured by the image sensor into low frequency and high frequency components, and then adapt only the brightness of the low frequency components. For this purpose, any method for splitting the image data in low frequency components and high frequency components is possible. For example, the image data, or at least the intensity values of the image data, may be multiplied with a low pass filter kernel to obtain the low frequency components:

$$intensity\_LF = intensity\_image * LP\_filter\_kernel$$

Where intensity_LF is the low frequency component, intensity_image is the input image data, LP_filter_kernel is a filter kernel that implements a low pass filter, and * denotes the convolution of the input image data and the filter kernel.

After determining the low frequency components, the high frequency components intensity_HF can be computed by:

$$intensity\_HF = intenstiy\_image - intensity\_LF$$

Then, the low frequency components of the image data can be adapted. For example, the low frequency components in the image data, in particular in the bright image area of the image data can be restricted by a predetermined value, or the low frequency components of the brightness in the image area can be reduced by a predetermined factor or value.

After adapting the brightness of the low frequency components of the image data, the new image data can be computed by adding the unchanged high frequency components and the adapted brightness of the low frequency components.

Figure 2 shows a schematic illustration of adapting the brightness of an image according to an embodiment. As can be seen in section I of Figure 2, the image data 10 comprises a bright image area 12. For instance, this bright image area may be caused by a light source L. Further, the image data 10 comprises "normal" image data 11. According to section II of Figure 2, image data 10 may be separated into the "normal" image data 11 and image data 11 of the bright image area. Then, the brightness in the bright image area 12 is restricted to obtain an image area 12' with a restricted brightness. Finally, in section III of Figure 2, the "normal" image data 11 and the image data 12' with the restricted brightness in the bright image area are combined to obtain an image 10'.

In the embodiment of the previous description, the brightness of the image data and the bright image area is adapted by an image processing process after capturing the image data by image sensor 1. Alternatively or additionally, it is also possible to adapt the brightness during an image capturing process. For instance, image sensor 1 may comprise an imaging unit with a plurality of image capturing elements. After identifying a bright image area in the image data, the image capturing elements in the imaging unit of image sensor 1 may be adapted accordingly. In particular, the image capturing elements may be setup in such a manner that the brightness sensitivity of the respective image capturing elements is reduced. In this way, the brightness intensity of the image data output by image sensor 1 of the image data relating to the identified bright image area is decreased.

Alternatively or additionally, it is also possible to damp the brightness of the light directed to image sensor 1 and/or to a driver or other persons inside the vehicle. For instance, a brightness filter element 4 may be arranged in front of image sensor 1, which is adapted to damp the brightness of light from a scene in the field of view of image sensor 1 in the direction to image sensor 1. By damping only the light in an area relating to the identified bright image area, the brightness of the image data relating to the bright image area can be also reduced. For example, such a damping element 4 may be arranged at or combined with a window between the scene and imaging sensor 1. Additionally or alternatively, the damping element 4 might be arranged or combined with a windshield to damp from a light source in the direction of a driver or another person inside the vehicle. For example, it is also possible to apply such a light damping element 4 at a window between a user and a surrounding scene. For example, such a damping element 4 may be combined with a windshield of a vehicle. In this way, glare due to a very bright light source can be avoided by damping the light relating to the identified bright image area.

However, any further method for reducing brightness only in an identified bright image area and leaving the brightness of the remaining image data unchanged is possible, too.

Figure 3 shows a flowchart of a method underlying an embodiment. In step S1, image data are captured by an image sensor. In step S2, a bright image area 11 is identified in the captured image data. The bright image area can be identified, for example by identifying pixels having a brightness larger than a predetermined threshold value. However, any other method for identifying bright image areas is possible, too. In step S3, the brightness of the image data in the identified bright image area is reduced.

Summarizing, the present invention relates to an enhanced imaging. In order to avoid or reduce glare caused by bright light sources, bright image areas are identified in image data captured by an image sensor. Based on the identified bright image areas, only the brightness of the image data relating to the bright image area is adapted, while the brightness of the remaining image data is maintained.

**Claims**

1. A method for adapting brightness in image data, comprising the steps of:

   capturing (S1) image data by an image sensor (1);
   identifying (S2) a bright image area (11) in the captured image data (10), wherein a brightness value in the bright image area (11) exceeds a predetermined threshold level; and
   reducing (S3) the brightness in the identified bright image area (11).

2. The method according to claim 1, wherein identifying (S2) the bright image area (11) in the captured image data (10) comprises identifying an image area relating to a blinding effect.

3. The method according to claim 1 or 2, wherein a brightness value in the bright image area (11) exceeds a predetermined threshold level.

4. The method according to any of claims 1 to 3, wherein reducing (S3) the brightness comprises reducing a brightness value in the captured image data (10) relating to the bright image area (11).

5. The method according to any of claims 1 to 4, wherein identifying (S2) a bright image area (11) in the captured image data (10) comprises separating the image data (10) in low frequency image data and high frequency image data, and
   reducing (S3) the brightness in the bright image area (11) comprises reducing only the brightness in the low frequency image data.

6. The method according to any of claims 1 to 5, wherein reducing (S3) the brightness comprises activating a brightness damping unit (4).

7. The method according to any of claims 1 to 6, wherein reducing (S3) the brightness comprises adjusting a setting of image capturing elements of the image sensor (1) according to the identified bright image area (11).

8. The method according to any of claims 1 to 7, wherein the brightness in the bright image area (11) is reduced by a predetermined value or a predetermined factor.

9. The method according to any of claims 1 to 8, wherein identifying (S2) a bright image area (11) in the captured image data (10) comprises identifying only image area having at least a predetermined size.

10. An image capturing apparatus, comprising:

    an image sensor (1), adapted to capture image data;
    an image segmenting unit (2), adapted to identify a bright image area (11) in the captured image data (10); and

a brightness adapting unit (3), adapted to reduce the brightness in the identified bright image area (11).

11. The apparatus according claim 10, wherein the brightness adapting unit (3) is adapted to adjusting a setting of image capturing elements of the image sensor (1) according to the identified bright image area (11).

12. The apparatus according claim 10 or 11, further comprising a brightness damping unit (4).

13. The apparatus according claim 12, wherein the brightness damping unit (4) is arranged in front of the image sensor (1), and adapted to for locally damping brightness of light directed to the image sensor (1).

14. An advanced driver assistance system comprising an image capturing apparatus according to any of claims 10 to 13.

# FIG 1

# FIG 2

# FIG 3

Europäisches
Patentamt

European
Patent Office

Office européen
des brevets

# EUROPEAN SEARCH REPORT

Application Number

EP 17 16 6499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/176010 A1 (WALLACH BRET A [US] ET AL) 28 November 2002 (2002-11-28) | 1-4,7-11 | INV. H04N5/235 |
| Y | * paragraph [0018] - paragraph [0022] * | 6,12,13 | |
| A | * paragraph [0059] - paragraph [0070] * <br> * figures 1A,5-8 * | 5,14 | |
| X | WO 2015/151404 A1 (DENSO CORP [JP]) 8 October 2015 (2015-10-08) <br> * paragraph [0015] - paragraph [0074] * <br> * figures 1-8 * | 1-4,8, 10,14 | |
| X | US 2014/218559 A1 (YAMAGUCHI SHOTA [JP] ET AL) 7 August 2014 (2014-08-07) | 1-4,10 | |
| Y | * paragraph [0041] - paragraph [0150] * | 5 | |
| A | * figures 12-17 * | 6-9, 11-14 | |
| Y | US 2010/225782 A1 (SAMBONGI MASAO [JP]) 9 September 2010 (2010-09-09) <br> * paragraph [0048] * | 5 | |
| Y | JP H09 51484 A (MAZDA MOTOR) 18 February 1997 (1997-02-18) <br> * abstract; figure 1 * | 6,12,13 | TECHNICAL FIELDS SEARCHED (IPC) <br><br> H04N |

The present search report has been drawn up for all claims

| Place of search | Date of completion of the search | Examiner |
|---|---|---|
| The Hague | 14 September 2017 | Didierlaurent, P |

EPO FORM 1503 03.82 (P04C01)

## ANNEX TO THE EUROPEAN SEARCH REPORT
## ON EUROPEAN PATENT APPLICATION NO.

EP 17 16 6499

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2017

| Patent document cited in search report | | | Publication date | Patent family member(s) | | | Publication date |
|---|---|---|---|---|---|---|---|
| US 2002176010 | A1 | | 28-11-2002 | CN | 1611064 | A | 27-04-2005 |
| | | | | EP | 1371223 | A1 | 17-12-2003 |
| | | | | JP | 4398153 | B2 | 13-01-2010 |
| | | | | JP | 2005508574 | A | 31-03-2005 |
| | | | | KR | 20040052491 | A | 23-06-2004 |
| | | | | US | 2002176010 | A1 | 28-11-2002 |
| | | | | WO | 02076090 | A1 | 26-09-2002 |
| WO 2015151404 | A1 | | 08-10-2015 | JP | 2015198302 | A | 09-11-2015 |
| | | | | WO | 2015151404 | A1 | 08-10-2015 |
| US 2014218559 | A1 | | 07-08-2014 | JP | 2014155001 | A | 25-08-2014 |
| | | | | US | 2014218559 | A1 | 07-08-2014 |
| US 2010225782 | A1 | | 09-09-2010 | JP | 5468930 | B2 | 09-04-2014 |
| | | | | JP | 2010220207 | A | 30-09-2010 |
| | | | | US | 2010225782 | A1 | 09-09-2010 |
| JP H0951484 | A | | 18-02-1997 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017036645 A1